# EUROPEAN PATENT APPLICATION

(11) **EP 2 278 369 A1**
(43) Date of publication of application: **26.01.2011**
(21) Application number: 09746620.5
(22) Date of filing: 13.05.2009
(51) Int. Cl.: G02B 6/42, H01L 31/042, H01L 33/00

(54) **PHOTOELECTRIC CONVERSION UNIT**

(30) Priority: 13.05.2008 JP 2008126195
(71) Applicant: Sumitomo Electric Industries, Ltd., Chuo-ku Osaka-shi Osaka 540-0041 (JP)
(72) Inventor: SASAOKA Eisuke, Yokohama-shi Kanagawa 244-8588 (JP); NAKANISHI Tetsuya, Yokohama-shi Kanagawa 244-8588 (JP); NAKAMAE Kazuo, Yokohama-shi Kanagawa 244-8588 (JP)
(74) Representative: HOFFMANN EITLE
(86) International application number: PCT/JP2009/058919
(87) International publication number: WO 2009/139414

(57) **Abstract**

A photoelectric conversion unit in which efficiency of optical coupling and stability of mechanical coupling improve is obtained.

The photoelectric conversion unit includes a light density conversion element 11 which changes at an output end face the density of light that has impinged on an incident end face and outputs the light, and a photoelectric conversion element 13. The photoelectric conversion element 13 is arranged closely to a high light-density side of the light density conversion element 11, and integrated with this light density conversion element 11. The photoelectric conversion element 13 can be a solar cell or a light emission medium. In the light density conversion element 11, it is preferable that a refractive index profile in the radial direction in a section becomes a square distribution. Further, the light density conversion element 11 uses silica glass in a base member, and by changing the addition amount of impurity added in this glass, a refractive index profile is formed.

## Description

### Technical Field

The present invention relates to a photoelectric conversion unit including a light density conversion element and a photoelectric conversion element.

### Background Art

A photoelectric conversion system which utilizes optical energy with high efficiency has been disclosed in Patent Document 1. This photoelectric conversion system includes high refractive index regions, which are higher in refractive index than surroundings and have a conical shape, a light guiding means, of which one end is coupled to each conical vertex portion of the high refractive index regions formed in the predetermined number, and a photoelectric conversion means provided at the other end of the light guiding means.
In Patent Document 2, a solar energy generation system has been disclosed, which includes an optical means (PARABOLIC MIRROR ARRAY) which collects solar light, an optical fiber (OPTICAL FIBER) which guides the collected solar light, and a solar light conversion means (PHOTOVOLTAIC CELLS) to which the solar light is guided by this optical fiber.
In both of the related arts, after the solar light has been collected, it is guided to the solar light conversion means (photoelectric conversion means). Therefor, it is possible to reduce the using amount of a solar cell and to perform the solar energy generation efficiently and at low cost.

### Related Art Document

### Patent Document

Patent Document 1: JP-A-8-7626
Patent Document 2: USP NO. 5089055

### Summary of the Invention

### Problems that the Invention is to Solve

However, each of the above conventional systems is essentially constituted by at the minimum three parts. Namely, in the Patent Document 1, the system is constituted by the high refractive index regions (first part) which are higher in refractive index than surroundings and have the conical shape, the light guiding means (second part) of which one end is coupled to each conical vertex portion, of the high refractive index regions formed in the predetermined number, and the photoelectric conversion means (third part) provided at the other end of the light guiding means. In the Patent Document 2, the system is constituted by the optical means (first part) which collects solar light, the optical fiber (second part) which guides the collected solar light to the solar light conversion means, and the solar light conversion means (third part). Since these three parts are different from one another in function, they must be manufactured from different materials by different processes, so that the number of parts increases and the number of the manufacturing processes increase, Further, optical/mechanical coupling of their parts is necessary. Particularly, regarding the optical coupling, high positioning accuracy is necessary to obtain at least a predetermined coupling efficiency. In result, in the conventional systems, the optical coupling is inefficient, and also stability of the mechanical coupling is low.
The invention has been made in view of the above circumstances, and an object of the invention is to provide a photoelectric conversion unit in which efficiency of optical coupling and stability of mechanical coupling improve.

### Means for Solving the Problems

(1) A photoelectric conversion unit comprises:
   a light density conversion element which changes, at an output end face, density of light that has impinged on an incident end face, and outputs the light; and
   a photoelectric conversion element which is arranged closely to an end face of the light density conversion element where the light density becomes high, and integrated with the light density conversion element.

According to this photoelectric conversion unit, only two parts of the light density conversion element and the photoelectric conversion unit are directly coupled to each other optically and mechanically, so that an optical loss caused by intervention of an intermediate member and lowering of mechanical accuracy are difficult to be produced.
Further, the photoelectric conversion element is integrated on the high light-density side of the light density conversion element and can be mechanically coupled to the light density conversion element, whereby high coupling accuracy can be obtained by simple structure. In the light density conversion element, an optical path which focuses the light toward the high light-density side is formed. In case that the high light-density side is used as an output end face, the light from an incident end face can be collected on the photoelectric conversion element; and in case that the high light-density side is used as the incident end face, the light from the photoelectric conversion element can be diffused from the output end face.

(2) The photoelectric conversion unit according to (1) is **characterized in that** the photoelectric conversion element is a solar cell.

According to this photoelectric conversion unit, the light which has entered the incident end face is converted into light which focuses toward the output end face, and collected on the solar cell. Namely, the photoelectric conversion unit can be used as a solar energy generation unit. Since the light density conversion element is used in the form of a lens having a small diameter and a small thickness, compared with a case where the solar light is directly received at the solar cell without being collected, the required size of the solar cell can be reduced greatly.

(3) The photoelectric conversion unit according to (1) is **characterized in that** the photoelectric conversion element is a light emission medium.

According to this photoelectric conversion unit, by making the light enter by the light emission medium from the direction opposite to the direction in the using time of the photoelectric conversion unit as the solar energy generation unit, that is, from the side where the solar cell is set in the solar energy generation unit, the photoelectric conversion element becomes an element expanding the light. Hereby, the photoelectric conversion unit can be applied to general illumination or illumination for display device (for example, backlight of flat display).

(4) The photoelectric conversion unit according to any one of (1) to (3) is **characterized in that** the light density conversion element is a gradient index type in which a refractive index profile in a section parallel to the incident end face changes in a radial direction, and is substantially uniform in a vertical direction to the incident end face.

According to this photoelectric conversion unit, an optical beam in the light density conversion element propagates periodically while vibrating sinusoidally. In case that the incident light is a parallel beam which propagates vertically to the incident end face, taking one period length of vibration as one pitch (p), in a propagation length of p/4 or p/2, the incident light can be converted into converged light or diffusion light.

(5) The photoelectric conversion unit according to any one of (1) to (3) is **characterized in that** in the light density conversion element, a sectional area of a high refraction region having a refractive index of a predetermined value and more in a section parallel to the incident end face changes continuously from the incident end face side toward the output end face side,

According to this photoelectric conversion unit, in the light density conversion element, the sectional area of the high refractive region changes continuously from the incident end face side toward the output end face side, Hereby, along the shape of the high refractive region portion, the light can be guided in an arbitrary direction.

(6) The photoelectric conversion unit according to any one of (1) to (5) is **characterized in that** silica glass is used in a base member forming the light density conversion element, and a refractive index profile is formed in the light density conversion element by changing an addition amount of impurity added in this glass.

According to this photoelectric conversion unit, the silica glass is used as the base material, and into this silica glass, the impurity (dopant) for providing the refractive index profile, for example, GeO₂ is added. By changing the addition amount of its impurity, the light density conversion element in which the refractive index changes in the radial direction is obtained, Further, as described above, the refractive indexes in the circumferential direction and the longitudinal direction of the section become substantially uniform. For formation of the light density conversion element having such the refractive index profile, there can be suitably used a manufacturing technology of reacting a glass material with a dopant in frames, generating glass particles, accumulating the glass particles on a target, synthesizing a porous glass matrix including the dopant, and sintering this porous glass matrix thereby to obtain a so-called preform.

(7) The photoelectric conversion unit according to any one of (1) to (5) is **characterized in that** silica glass is used in a base member forming the light density conversion element, and a refractive index profile is formed in the light density conversion element by changing density of holes formed in the glass.

According to this photoelectric conversion unit, as means for providing the refractive index profile, the holes are distributed in the silica glass. This case can become about one digit larger in maximum relative index difference than the case where GeO₂ is added.

(8) The photoelectric conversion unit according to (6) or (7) is **characterized in that** material which is large in an absolute value of refractive index is used in the base material in place of the silica glass.

According to this photoelectric conversion unit, the material which is larger in the absolute value of the refractive index than the silica glass is used as the base material. In order to form a refractive index profile, by distributing the holes in this base material, it is possible to make the maximum relative index larger and thickness of the gradient index type plane lens smaller.

(9) The photoelectric conversion unit according to (1) is **characterized in that** a positioning means for positioning the photoelectric conversion element is provided in a predetermined position where the light density of the other end face of the light density conversion element becomes higher than the light density of one end face of the light density conversion element,

According to this photoelectric conversion unit, there is formed the groove that is the positioning means in response to the size and shape of the solar cell used in a focal position of the gradient index type plane lends. Therefore, by fitting the solar cell in this groove, optical and mechanical coupling can be realized with high accuracy and with ease.

(10) A photoelectric conversion unit **characterized in that** a plurality of photoelectric conversion units according to any one of (1) to (9) are arranged in array.

According to this photoelectric conversion unit, the plural light density conversion elements such as the gradient index type plane lenses are used in array, and the solar cells are individually provided for the gradient index type plane leases. Hereby, it is possible to manufacture with excellent mass-productivity and at low cost a solar energy generation unit of high density and high efficiency in which the solar cells and the gradient index type plane lenses are densely massed.

### Advantage of the Invention

According to the invention, the photoelectric conversion unit is constituted by the light density conversion element which changes at the output end face the density of light that has impinged on the incident end face and outputs the light, and the photoelectric conversion element which is arranged closely to the end face of the light density conversion element where the light density becomes high, and integrated with the light density conversion element. Therefore, by only coupling directly their two parts optically and mechanically, the unit can be constituted, and efficiency of optical coupling and stability of mechanical coupling can be improved.

### Brief Description of the Drawings

Fig. 1 is an exploded perspective view of a photoelectric conversion unit according to the invention.
Fig. 2 is an explanatory view of operation of a square distribution type waveguide as shown in Fig. 1.
Fig. 3 is a sectional view of a tapered waveguide.
Fig. 4 is a perspective view of plural photoelectric conversion units arranged in array.

### Mode for Carrying Out the Invention

A preferred embodiment of a photoelectric conversion unit according to the invention will be described below with reference to drawings.

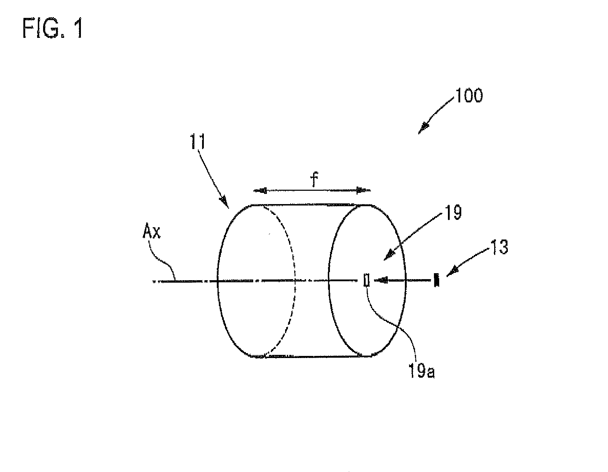

Fig. 1 is an exploded perspective view of a photoelectric conversion unit according to the invention.
A photoelectric conversion unit 100 according to the invention includes a light density conversion element 11 and a photoelectric conversion element 13. The light density conversion element 11 changes, at an output end face, the density of the light which has fallen on an incident end face to output the light.

The light density conversion element 11 according to the embodiment, as an example of a flat type collective element, constitutes a gradient index type plane lens in which a refractive index profile n(r) in a radial direction in a section becomes a square distribution expressed by (Expression 1).

n²(r) = n₀²(1-a²r²) (Expression 1)

Herein, no is a refractive index of waveguide center, a is a refractive index profile radius, and r is distance from an optical axis.

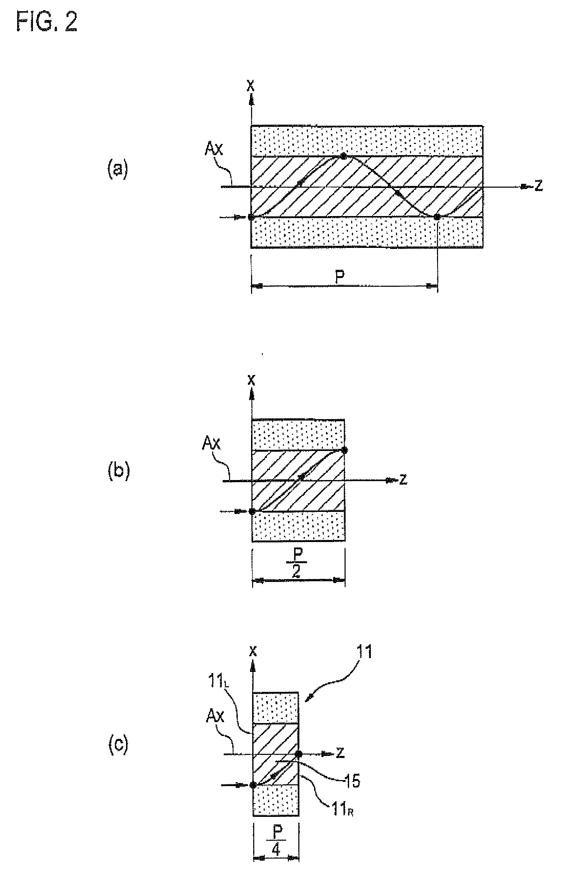

Fig. 2 is an explanatory view of a square distribution type waveguide constituting the gradient index type plane lens.
A light beam in the square distribution type waveguide, as shown in Fig 2(a), propagates periodically while vibrating sinusoidally. In case that the incident light is parallel light which propagates vertically to the incident end face, taking one period length of vibration as one pitch (p), in a propagation length of p/2 shown in Fig. 2(b), or in a propagation length of p/4 shown in Fig. 2(c), the incident light is converted into diffusion light or collected light. In the embodiment, there is utilized a refractive index profile which forms a light passage shown in Fig. 2(c) in which light collection/diffusion is performed. Namely, in the square distribution type waveguide, the refractive index profile in the section parallel to the incident end face changes in the radial direction, and is substantially uniform in the vertical direction to the incident end face (in the longitudinal direction).

In the light density conversion element 11 in which p/4 is taken as a focal length f, collective application has a plane 11_{L} shown in Fig. 2(c) as an incident end face, and a plane 11_{R} as an output end face; and diffuse application has a plane 11_{R} as an incident end face, and a plane 11_{L} as an output end face.

The light density conversion element 11 uses silica glass in its base member, and by changing the addition amount of impurity added in this glass, a refractive index profile can be formed. Into the silica glass used as the base material, the impurity (dopant) for providing the refractive index profile, for example, GeO₂ is added, and by changing the addition amount of its impurity, the light density conversion element in which the refractive index changes in the radial direction is obtained. Further, as described above, the refractive indexes in the circumferential direction and the longitudinal direction of the section become substantially uniform. For formation of the light density conversion element 11 having such the refractive index profile, there can be suitably used a manufacturing technology of reacting a glass material with a dopant in frames, generating glass particles, accumulating the glass particles on a target, synthesizing a porous glass matrix for optical fiber which includes the dopant, and sintering this porous glass matrix thereby to obtain a so-called preform,

In case that a case where the silica glass (n₀≡1.46) is used as the base material, and GeO₂ is added in order to provide the refractive index profile is assumed, and in case that the maximum relative index difference is 3%, and the refractive index profile radius is a=10cm, when the parallel light impinges vertically on the gradient index type plane lens (light density conversion element 11), the incident light is focused on a point about 65 cm distant from the incident face (namely, a light collecting ratio becomes the maximum).

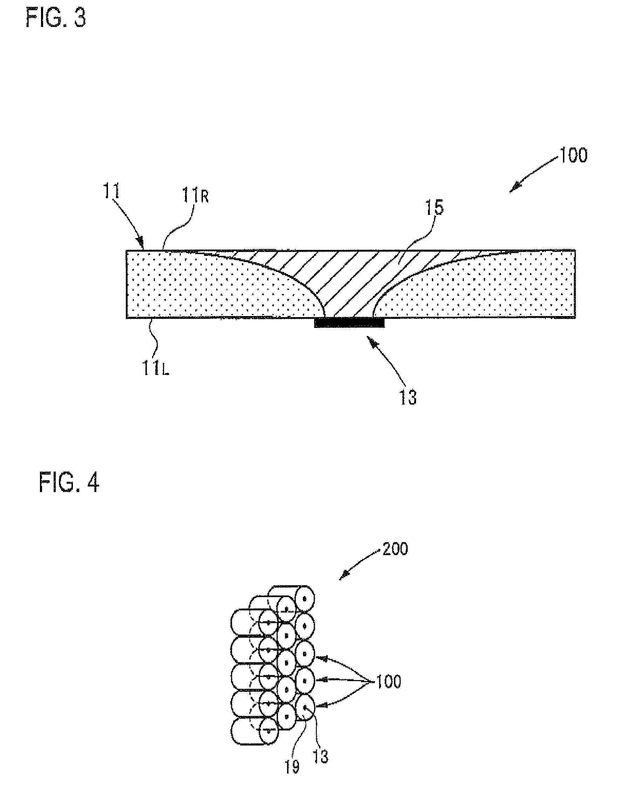

On the other hand, as another means for providing the refractive index profile, it is also effective to distribute holes in the silica glass (refer to USP No, 7039284, Fig. 2B and Fig. 3). This case can become about one digit larger in maximum relative index difference than the case where GeO₂ is added. In this result, in case that the refractive index profile radius is 10cm, the focal distance can be shortened to about 20cm, and the thickness of the gradient index type plane lens (light density conversion element 11) can be reduced,

Further, in case that the holes are distributed to form the refractive index profile, it is possible to form a lens by a single material. Therefore, in case that an inexpensive material is used as the base material, an inexpensive gradient index type plane lens can be manufactured.

The base material of the light density conversion element 11 is not limited to the silica glass. In case that material which is larger in an absolute value of the refractive index than the silica glass is used as the base material, and holes are distributed in this base material to form the refractive index profile, it is also possible to make the maximum relative index larger and thickness of the gradient index type plane lens smaller.

In both of the constitution in which GeO₂ is added and the constitution in which the holes are distributed, the material having the positive refractive index is used. In case that a material having the negative refractive index which uses a so-called metamaterial is utilized, the collective element can be made thinner than the above example.

In the photoelectric conversion unit 100 according to the embodiment, the photoelectric conversion element 13 is arranged closely the end face (plane 11_{R} side in Fig. 2(c)) of the light density conversion element 11 where the light density is high, and integrated with the light density conversion element 11. The photoelectric conversion element 13 can be integrated on the high light-density side of a pair of parallel planes (incident end face 11_{L} or output end face 11_{R}) of the light density conversion element 11 and can be coupled mechanically, whereby high coupling accuracy is obtained by simple structure. In the light density conversion element 11, a light path (core part 15) in which the light is collected toward the high light-density side is formed, which collects the light from the incident end face onto the photoelectric conversion element 13.
The term of "closely to " includes "in contact with the end farce", "in the vicinity of the end face", and "in engagement with a recess portion of the end farce".

For this photoelectric conversion element 13, a solar cell can be used. Hereby, the light which has entered the incident end face 11_{L} is converted into light which focuses toward the output end face 11_{R} , and the photoelectric conversion unit 100 become a solar energy generation unit which collects the light on the solar cell, Since the light density conversion element 11 is used in the form of a lens having a small diameter and a small thickness, compared with a case where the solar light is directly received by the solar cell without being collected, the required size of the solar cell can be reduced greatly.

Thus, by setting the solar cell in a focal position of the light density conversion element 11, even in case that focal misalignment caused by the manufacturing incompleteness of the gradient index type plane lens, or positioning accuracy of the solar cell setting position is considered in the above example, the light sufficiently collected in a range of a radius of about 0.5cm can be coupled. Hereby, compared with the case where the solar light is directly received by the solar cell without being collected, the required size of the solar cell can be reduced to 1/400 {=(0.5/10)²}.

For the photoelectric conversion unit 100, a positioning means 19 for positioning the photoelectric conversion element 13 is provided in a predetermined position where the light density of the other end face of the light density conversion element 11 becomes higher than that of one end face thereof. As means for coupling the light density conversion element 11 and the photoelectric conversion element 13 to each other, a groove 19a that is the positioning means 19 in response to the size and shape of the photoelectric element 13 is formed in the position where the light density of the gradient index type plane lens becomes high, and the photoelectric conversion element (solar cell or the like) 13 is set in this groove 19a, whereby it is possible to realize optical and mechanical coupling of the light density conversion element 11 and the photoelectric conversion element 13.

Here, the "optical coupling" means that the light density conversion element (collective element) 11 and the photoelectric conversion element (solar cell or the like) 13 are arranged closely on the same axis so that the desired light collection ratio is obtained. The "mechanical coupling" means that the light density conversion element 11 and the photoelectric conversion element 13 are integrated with an adhesive or a mold.

By forming the groove 19a in response to the size and shape of the solar cell used in the focal position of the gradient index type plane lens, the solar cell is fitted to this groove 19a, and the optical and mechanical coupling can be readily realized with high accuracy.

In the photoelectric conversion unit according to the invention, it is enough that the photoelectric conversion element (solar cell or the like) 13 is arranged closely to the light density conversion element 11 so that the light collecting position becomes a suitable position regardless of the focal distance, and integrated with the light density conversion element 11. The light density conversion element 11 is not limited to the plane lens. For example, it may be a waveguide thinning in a tapered shape that collects the light as long as its tapered waveguide portion has the desired light collecting area,

Fig. 3 is a sectional view of a tapered waveguide replaced with the square distribution type waveguide.
In a light density conversion element 11 constituting this tapered waveguide, the sectional area of a high refraction region 15 having a refractive index of a predetermined value and more in a section parallel to an incident end face changes continuously from the incident end face side toward an output end face side. Hereby, the light density conversion element 11 can guide the light along the shape of the high refraction region portion formed arbitrarily.

Fig. 4 is a perspective view of plural photoelectric conversion units arranged in array.
The plural photoelectric conversion units 100 may be arranged in array. By using, for example, plural gradient index type plane lenses which are the light density conversion elements 11 in array, and providing a solar cell for each of the gradient index type plane lenses, it is possible to manufacture with excellent mass-productivity and at low cost a solar energy generation unit 200 of high density and high efficiency in which the solar cells and the gradient index type plane lenses are densely massed.

Further, in the photoelectric conversion unit 100, the light density conversion element 11 can become an element expanding the light when the light is made to enter the light density conversion element 11 from the direction opposite to the direction in the using time of the photoelectric conversion unit 100 as the solar energy generation unit, that is, from the side where the solar cell is set. Therefore, this photoelectric conversion unit 100, by using a light emission medium (LED, EL, or the like) for the photoelectric conversion element 13 in place of the solar cell, can be applied also to general illumination or illumination for display device (for example, backlight of flat display).

Thus, in the photoelectric conversion unit 100, only two parts of the light density conversion element 11 and the photoelectric conversion unit 100 are directly coupled to each other optically and mechanically, so that an optical loss caused by intervention of an intermediate member and lowering of mechanical accuracy are difficult to be produced.

Accordingly, since the photoelectric conversion unit 100 having the above constitution is constituted by the light density conversion element 11 1 which changes the density of light that has impinged on the incident end face and outputs the light from the output end face, and the photoelectric conversion element 13 integrated with the light density conversion element on the end face which is the high light-density side of the light density conversion element, by only coupling directly their two parts optically and mechanically, the unit can be constituted. Therefore, compared with the conventional unit constituted by two or more components, efficiency of optical coupling and stability of mechanical coupling can be improved.

As means of realizing a wider solar light receiving area, a method of increasing the light receiving area per a collective element is thought. In this case, by a collective element using the aforesaid metamaterial, the light receiving area can be increased. In this time, combination with treatment of suppressing the increase in thickness of the collective element becomes useful in setting ease of the collective element. Further, as another means, as shown in Fig. 4, it is also thought that the plural collective elements (gradient index type plane lenses in this figure) are used in array. In this case, the solar cell is provided for each plane lens, and if the use of the plane lens and the solar cell one by one is insufficient, the solar cells may be used for each plane lens, or may be used in array for each plane lens.

While the invention has been described in detail and with reference to the specie embodiment thereof, it would be apparent to those skilled in the art that various changes and modifications may be made therein without departing from the spirit and the scope of the invention. The invention is based on Japanese Patent Application No. 2008-126195, filed on May 13, 2008, the entire contents of which are herein incorporated by reference.

### Description of Reference Numerals and Signs

11: Light density conversion element, 11_{L}: Output end face (or incident end face), 11_{R}: Incident end face (or output end face), 13: Photoelectric conversion element, 19: Positioning means, 19a: Groove, 100: Photoelectric conversion unit, Ax: Optical axis

## Claims

1. A photoelectric conversion unit comprising:
a light density conversion element which changes, at an output end face, density of light that has impinged on an incident end face, and outputs the light; and
a photoelectric conversion element which is arranged closely to an end face of the light density conversion element where the light density becomes high, and integrated with the light density conversion element.

2. The photoelectric conversion unit according to Claim l, **characterized in that** the photoelectric conversion element is a solar cell.

3. The photoelectric conversion unit according to Claim 1, **characterized in that** the photoelectric conversion element is a light emission medium.

4. The photoelectric conversion unit according to any one of Claims 1 to 3, **characterized in that** the light density conversion element is a gradient index type in which a refractive index profile in a section parallel to the incident end face changes in a radial direction, and is substantially uniform in a vertical direction to the incident end face.

5. The photoelectric conversion unit according to any one of Claims 1 to 3, **characterized in that** in the light density conversion element, a sectional area of a high refraction region having a refractive index of a predetermined value and more in a section parallel to the incident end face changes continuously from the incident end face side toward the output end face side.

6. The photoelectric conversion unit according to any one of Claims 1 to 5 **characterized in that** silica glass is used in a base member forming the light density conversion element, and a refractive index profile is formed in the light density conversion element by changing an addition amount of impurity added in this glass.

7. The photoelectric conversion unit according to any one of Claims 1 to 5, **characterized in that** silica glass is used in a base member forming the light density conversion clement, and a refractive index profile is formed in the light density conversion element by changing density of holes formed in the glass.

8. The photoelectric conversion unit according to Claim 6 or 7, **characterized in that** material which is large in an absolute value of refractive index is used in the base material in place of the silica glass.

9. The photoelectric conversion unit according to Claim 1, **characterized in that** a positioning means for positioning the photoelectric conversion element is provided in a predetermined position where the light density of the other end face of the light density conversion element becomes higher than the light density of one end face of the light density conversion element.

10. A photoelectric conversion unit **characterized in that** a plurality of photoelectric conversion units according to any one of Claims 1 to 9 are arranged in array.
